# EUROPEAN PATENT SPECIFICATION

(11) **EP 3 220 097 B1**
(45) Date of publication and mention of the grant of the patent: **07.11.2018**
(21) Application number: 17161271.6
(22) Date of filing: 16.03.2017
(51) Int. Cl.: G01B 11/24, G01N 21/88, G01N 21/15

(54) **OPTICAL INSPECTION DEVICE**
OPTISCHE INSPEKTIONSVORRICHTUNG
DISPOSITIF D'INSPECTION OPTIQUE

(30) Priority: 17.03.2016 IT UA20161769
(43) Date of publication of application: 20.09.2017
(73) Proprietor: SORTEC S.R.L., 80031 Brusciano (NA) (IT)
(72) Inventor: ROMANO, Simone, 80031 Brusciano (NA) (IT)
(74) Representative: Trentin, Michele

(56) References cited:
- EP-A2- 1 057 545
- WO-A1-2005/045406
- JP-A- S61 155 906
- US-A1- 2004 086 173
- US-B1- 6 568 407

## Description

### Field of application

This invention is generally applicable to the technical field of mechanical machining, with particular reference to the production of articles of various shape and size, small parts and the like.

In particular, this invention relates to instruments for optical control for the quality control of the production of items or articles produced in a production line.

### State of the art

In the industrial production, an important aspect is constituted by the quality control of the produced elements. In fact, they must not show defects, or, at least the defects must be less than a predetermined tolerance threshold. Generally, also their sizes must be precise so as to ensure the functionality.

For this reason, the quality controls are made not only at the end of the line, but also in specific points of the production line in order to highlight immediately the specific processing to be controlled and the tools to be recalibrated or replaced.

Typically, the quality controls are carried out by means of optical inspection of the external surface geometry and sizes of the elements being produced.

To carry out these controls, optical inspection device are known, such as digital profilometers, which take pictures of the pieces to be controlled. The captured image precisely depicts the edge of the elements shape allowing an accurate measurement of the size and of shaping using an image processing software.

A first type of digital profilometers envisages the control of a single element at a time by placing it in a vertical position and proceeding to its photograph. This allows an accurate control and a precise arrangement of the elements with respect to the camera. However, the quality control is slow because it is performed one element at a time.

Thus, several optical inspection device are known, allowing, with a single picture, to control more than one element. These, in particular, are arranged on a horizontal supporting plane where they are framed from above. This allows to control simultaneously more than one element speeding up the operation, but such control is little accurate when, for example, the supporting part of the elements is not flat. In fact, a crucial aspect is to ensure a predetermined framing of the elements, as they often exhibit asymmetries which compromise the correct placement when arranged freely. In fact, when the elements are not substantially flat, it may be necessary a placement which cannot be obtained with the simple free arrangement on a plane, making the optical control impossible or, in any case, affected by errors.

It is evident, as stated, that the free arrangement of the element on a supporting plane does not allow the fulfilment of the above-mentioned requirements. In fact, for example, if those elements were substantially longitudinal, but characterized by an external surface generally shaped, they could be arranged with the longitudinal axis not orthogonal to the optical axis of the shooting device. This would prevent the correct control of the sizes of the longitudinal section, that would be distorted by the inclination.

Even the measurement of all the elements with a single picture, as advantageous in terms of run time, has some drawbacks. In particular, the accuracy of the measurement will be limited due to the greater framed field, at an equal resolution of the optical device. Moreover, large sized and, thus, very expensive special optics could be required in case of shooting of multiple elements without perspective distortions.

To overcome, at least partially, the previous drawbacks, optical inspection device are known in which the supporting surface is counter-shaped to the external surface of the elements to be controlled so as to ensure the correct placement. However, such supports should have windows in order to make the profile of the elements in the points to be controlled clearly visible in the image. Thus, such solution is expensive in terms of execution and little flexible in case of requirement of the subsequent addition of new measurements.

In order to allow a proper optical control of the produced elements, they must not be dirty or covered with oil as it typically happens.

Thus, an important aspect is the cleanliness of the elements leaving or being processed in the production line.

In the known technique the cleaning is typically manual and it is performed by the operator who takes care of the control. Evidently, however, such way of operation is expensive in terms of time and effort and, therefore, also in economic terms. Moreover, like for all the manual processes, the result is neither uniform nor very repeatable. Moreover, it is evident that, often, the production line is unacceptably slowed down.

Thus, industrial washing machines are known, which use baskets filled with the elements to clean which can freely move. These machines take advantage of the centrifugal force generated by the rotation of the basket to clean the elements. Although such method is fast for the purpose of a general cleaning of high amounts of elements to be cleaned, it is totally inadequate when it is desired a uniform and repeatable and, thus, controlled cleaning, for each element to be cleaned, completely preventing the risk to cause any damage, even negligible, to the external surface of the elements themselves. Such prerequisites are essential when the elements to be cleaned must respect strict mechanical specification and must be subjected to subsequent quality controls which envisage the control of the smallest defect.

There are also known automated systems, which blow compressed air on the single elements. Although this allows to preserve the integrity of such elements, the cleaning is not sufficiently accurate because of the shaping of the elements to be cleaned. In addition, it raises clouds of dirt which lay on the whole surrounding area.

Alternatively, washing systems with suitable liquids possibly combined with ultrasound are known. However, since certain residues are not easy to remove simply with water, it is necessary to act with aggressive liquids which are not always compatible with the materials used during the production and which, in any case, involve long cleaning time and high costs both for raw materials and subsequent disposal.

In some cases it is also possible to use systems featuring brushes or the like, but also this solution has acknowledged drawbacks. In some cases, in fact, the shaping of the elements does not allow a proper cleaning. In addition, the brushes tend to get dirty quickly and require continuous replacements.

In any case, a common drawback of all such systems is that they require the constant presence of an operator who, first, arranges the elements in a machine, which cleans them and, subsequently, picks them up and rearranges them in the profilometer.

It is evident that such way of acting is expensive both because of the presence of the operators during the whole operation, and in terms of time to carry it out and required expertise so that it is correctly performed. An incorrect cleaning or a careless arrangement of the elements to be controlled in the profilometer would compromise the efficiency of the controls.

Moreover, the overall instrument is particularly cumbersome and difficult to manage.

US 2004/086173 A1 discloses an optical inspection device for test tubes comprising one image-capturing device for capturing images of the test tubes, one support group composed of a rack adapted to maintain a plurality of test tubes in a predetermined axis and moving means for generating a relative motion between the support group and the optical device.

### Introduction of the invention

Object of the present invention is to overcome, at least partially, the above-mentioned drawbacks, by providing an optical inspection device of elements being produced in line, which is accurate, fast, compact and easy to use.

Since many modern machine tools features multiple machining heads to perform the same process on multiple elements simultaneously, a particular object is the optical inspection device of the invention allowing the substantially simultaneous control of two or more elements so that the result is directly associated with the respective machining head of the machine tool.

Another object is the optical inspection device of the invention allowing to ensure that the elements to be tested are safely arranged according to a predefined position with respect to the optical axis of the image capturing device regardless of the shaping of their external surface.

A further object is the optical inspection device of the invention allowing accurate results regardless of the degree of dirt that affect the elements being produced.

Another object is the fact that the tool does not necessarily require the presence of operators next to the machine during its operation.

Such objects, as well as others which will be better understood below, are achieved by an optical inspection device of elements being produced in a line according to the independent claim 1 and the dependent claims 2 to 9, which are to be considered as an integral part of the present patent.

In particular, it comprises at least one projector for the illumination of the elements to be controlled and at least one image-capturing device of the illuminated elements.

There is also at least one support group of two or more elements to be controlled, comprising at least one workpiece-holding element capable of retaining at least one respective element to be controlled in a position according to at least a predetermined axis with respect to the optical axis of the image-capturing device.

In other words, the support group is arranged to place the elements to be controlled according to one or more predetermined axes, thereby enabling to avoid that the same elements to be controlled are placed incorrectly with respect to the optical axis of the image-capturing device.

Thus, advantageously, the arrangement of the element position to be controlled allows to avoid that they are positioned in an inconvenient way due to a free laying. It is clear that this does not preclude that the elements to be controlled are moved, perhaps rotating them on their own axis, this latter being, in any case, predetermined to ensure a correct positioning, instant by instant, with respect to the optical axis of the image-capturing device.

According to the invention, the optical inspection device also includes at least a motorized device to rotate at high speed the workpiece-holding element so as to perform the cleaning by centrifugation.

Thus, advantageously, the same device includes both a portion that realizes a profilometer and a cleaning portion of the inserted elements.

Still advantageously, this cleaning is performed on the elements arranged for the next inspection. So, advantageously, it is not needed the presence of an operator who repeatedly arranges the elements to be controlled in order to clean them before controlling.

Moreover, such two operations are optimized since the arrangement of the element to be controlled ensures an optimal cleaning (the cleaning by centrifugation is definitely optimal since it is guaranteed that the piece is arranged according to the axis of rotation of the centrifuge), and an optimal measurement (axis orthogonal to the optical axis).

According to the invention, the optical inspection device comprises movement means to achieve a relative motion between the workpiece-holding elements and the image-capturing device. In this way, advantageously, each element to be controlled can be framed and photographed separately from the other during the execution of the relative motion.

According to the invention, there are also detection means of each of the workpiece-holding elements to jointly activate at least the image-capturing device. In other words, for each element to be controlled there is a sensor or the like to actuate at least the acquisition device as well as, for example, the projector. Since between the image-capturing device and the workpiece-holding elements there is a relative motion created with the movement means, such arrangement advantageously allows to capture the images only from the elements to be controlled actually arranged on the support group and to identify uniquely which element to be controlled was framed.

For what has been said it is observed that, advantageously, the inventive optical inspection device allows to control a greater quantity of elements, for each ensuring the correct positioning and, therefore, the correct framing as well as the correct instant (or period if, for example, in rotation) of the profile measurement.

Still advantageously, the relative movement between the elements and the image capturing device allows to avoid to pick up all the elements with a single capture, but to devote to each element or indifferently to groups of elements specific captures.

### Brief description of the drawings

Further features and advantages of the invention will be more evident in light of the detailed description of some preferred but not exclusive embodiments of an optical inspection device according to the invention, illustrated by way of non-limiting example with the aid of the accompanying drawings, wherein:
- FIG. 1 represents a front view of an optical inspection device according to the invention;
- FIGS. 2 and 3 represent the device of FIG. 1 in two axonometric views;

- FIGS. 4 to 6 represent details of the device of FIG. 1;
- FIGS. 7 and 8 represent the device of FIG. 1 in two operating phases;
- FIG. 9 represents a further detail of the device of FIG. 1.

### Detailed description of an example of a preferred embodiment

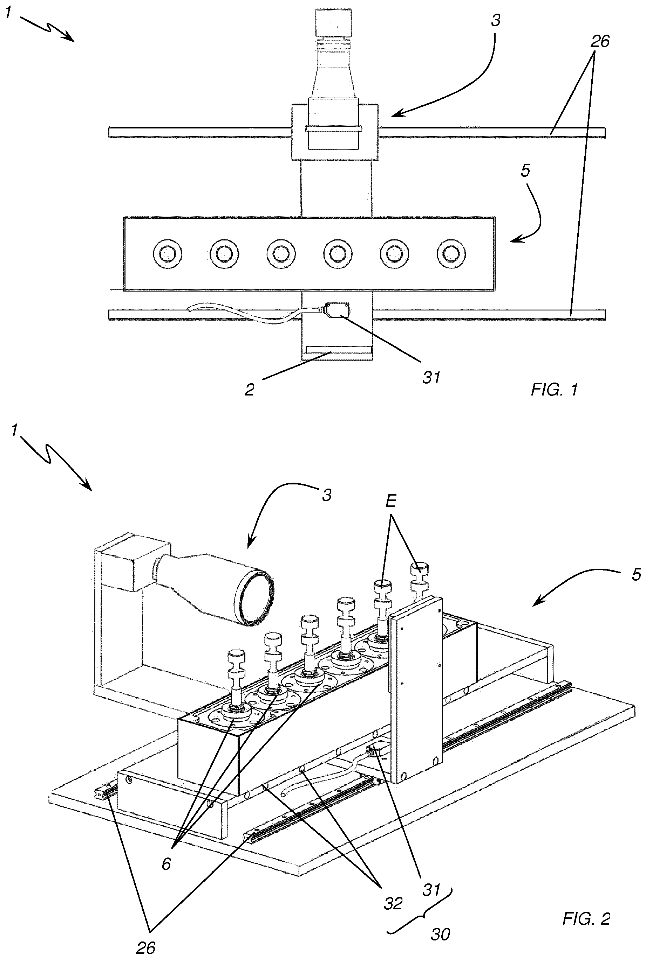

With reference to the above-mentioned figures and, in particular, to figs. 1 to 3, it is disclosed an optical inspection device **1** for the control of elements **E** being produced in a line.

In particular, the optical inspection device **1** allows the optical control of elements **E** to check the wear condition of the tools in the various processing steps to which they are subjected. However, this should not be considered as limiting for different uses of the optical inspection device **1** such as, for example, the quality control of the elements **E** at the end of the line.

For the execution of the optical control, the device **1** comprises a projector **2** for the illumination of the elements to be controlled **E** and an image-capturing device **3** of the same illuminated elements **E**.

In the figures, it is observed that the shown optical inspection device **1** is a digital profilometer, the projector **2** being arranged behind the elements to be controlled **E** and the capturing device **3** frontally. However, this should not be considered limiting for the invention as, for example, the illumination can come from the same side of the capturing device and the device can be of different type with respect to the profilometers.

The number and the type of projectors and image capturing devices are also non-limiting characteristics for the invention since they could be any number and type.

According to an aspect of the invention, the optical inspection device **1** comprises a support group **5** of elements **E** to be controlled. In the figures it is observed that such support group **5** allows the arrangement of six elements to be controlled **E** moreover arranged in a straight line, but these aspects as well should not be limiting for the invention, being the number greater than one and the arrangement of any type. In fact, the optical inspection device **1**, advantageously allows the control of multiple elements **E** differing from those known devices, which allow the control of a single element at a time.

In this sense, the support group **5** comprises a workpiece-holding element **6** for each element to be controlled **E** possibly housed by the support group **5**. Such workpiece-holding element **6** helps to keep the respective element to be controlled **E** in a position according to a predetermined axis with respect to the optical axis of the image capturing device **3**.

In other words, the coupling between the elements to be controlled **E** and the support group **5** is obtained by means of the workpiece-holding elements **6**, thus acting as a mechanical interface. The fact that each workpiece-holding element **6** is dedicated to a single element to be controlled **E** should not be considered as a limiting feature for the present invention although it is possible to include executive variants in which the workpiece-holding elements can simultaneously house multiple elements to be controlled.

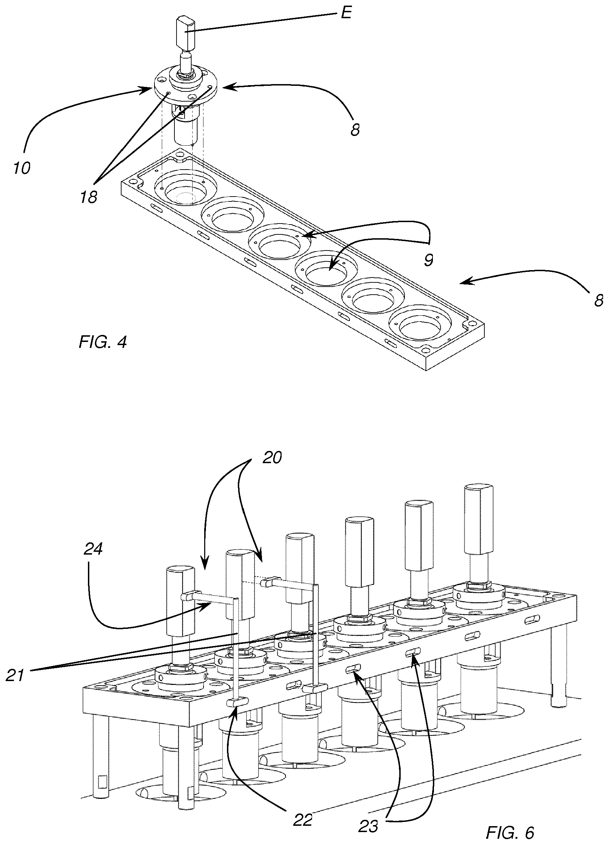

Going into detail of the disclosed embodiment, the support group **5** comprises, as can be observed in the detail of fig. 4, a substantially laminar body **8** equipped with a plurality of housings **9** each suitable to accommodate a respective workpiece-holding element **6.**

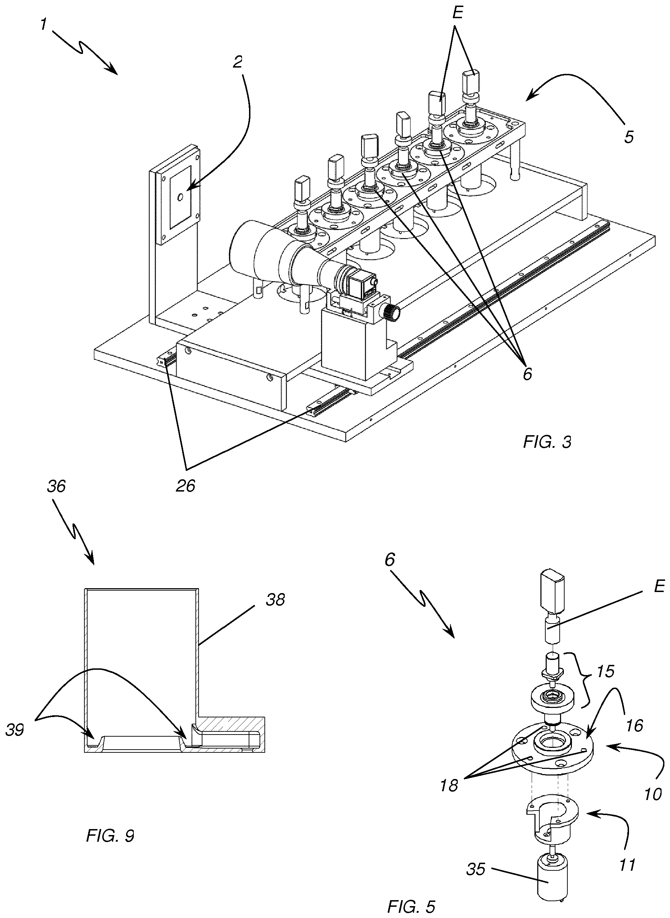

According to the latter, it comprises, as can also be observed in the detail of fig. 5, a first flange **10** and a second flange **11** mutually coupled on one another. In addition, the housings **9** have a shaping, which is suitable to accommodate the flanges **10,11.**

This embodiment allows an easy management of the elements to be controlled **E** from several points of view. First, in case they are dirty and the dirt were to leak on the support group **5,** the double flange system allows such dirt to be drawn towards the bottom of the support group **5** itself while protecting the electrical or mechanical parts that may be located below the second flange **11.**

In addition, still advantageously, this embodiment allows to predict, as it will be seen later, the tilt adjustment of the workpiece-holding elements **6,** and with them the elements to be controlled **E**, as compared to the laminar body **8**.

Despite the above-mentioned advantages, however, even these executive details of the support group **5** are not to be considered as limiting for the present invention.

According to a further aspect of the invention, the connection of the element to be controlled **E** to the workpiece-holding element **6** is achieved by a gripping body **15** emerging from the free end **16** of the workpiece-holding element **6**.

The figures show that the elements to be controlled **E** are kept in a substantially vertical position. In no case, also this detail should be considered as limiting for the invention. In fact, according to different embodiments, the elements to be controlled are arranged according to a horizontal or oblique axis. What matters is, in fact, that the workpiece-holding elements keep the elements to be controlled **E** positioned according to at least one predetermined axis. As mentioned, since an important aspect is that one of the axes of symmetry of the elements to be controlled **E** is orthogonal to the optical axis of the image capturing device **3**, it is evident that such a detail advantageously allows to achieve easily this object by suitably adjusting the vertical axis of the individual elements to be controlled **E** so as to compensate for any construction mechanical tolerances of the system components.

This adjustment can be made during the operating phase of the optical inspection device **1** of the invention. However, since the same optical inspection device **1** may be used to control elements **E** being produced and having the most diverse shape and manufacture, the same adjustment may also be useful during use.

For this reason, advantageously, the optical inspection device 1 comprises tools **18** to adjust the tilt of the workpiece-holding element **6** with respect to the laminar body **8**. More in detail, such adjustment tools **18** are constituted by spacer through screws to the first flange **10** and screwed in the laminar body **8** so that their screwing or unscrewing modify the distance of the first flange **10** from the laminar body **8** at that point. By doing so, what is clear is how easy the tilt control of the element **E** being produced is.

However, such a detail should not be considered a limiting detail for the invention. In fact, the tilt adjustment can also be obtained by different hydraulic or mechanical tools. The number of spacer screws and their position (the drawings show three bolts that are 120° apart from one another) are non-limiting characteristics of the invention. In addition, the adjustment tools may be manual, as in the case described above, or automated by means of motors, hydraulic pumps or more. One single adjustment may also be present for the entire support group and/or, equally, for the image capturing device.

In view of what has just been said, it is also known that often the elements to be controlled **E** show processes located at certain points and therefore non-symmetrical around an axis, so they can only be controlled by orienting the elements E so as to put these details in a visible position with respect to the optical recovery device. However, it is clear that laying elements E on their supports, if said supports allow freedom of movement to the elements E, is not always an accurate and stable procedure, and in case of localized shaping that is not distributed around element E, it may prevent proper control.

For this reason, according to another aspect of the invention, the optical inspection device **1** comprises, as it can be observed in figure 6, also a guide group **20** to ensure the proper orientation of the elements to be controlled **E**. Specific to the described embodiment, that should not be considered limiting to the invention as it has often already been said, this guide group **20** comprises a guide body **21**, whose first end **22** can be inserted into an opening **23** on the support group **5** in correspondence of the workpiece-holding element **6**, and whose second end **24** is intended to abut on the element to be controlled **E** to keep it with a predefined orientation.

On the basis of what has been said, what is evident is the particular precision of the optical inspection device **1** of the invention. In order to ensure that it remains unchanged over time and, simultaneously, that the results of the measurements and control are certified, the optical inspection device **1** of the invention also includes, although not shown in the figures, some precision gauges, i.e. elements having a known and precise size, which are framed by the image capturing device **3** to perform the calibration of the inspection device.

The number and position of the gauges can be any number or position without limiting the invention.

According to a further aspect of the invention, the optical inspection device **1** comprises movement means, not shown in the figures, in order to achieve a relative motion between the workpiece-holding elements **6** and the image capturing device **3**. According to the described embodiment, what is moved is the image capturing device **3**, while the workpiece-holding elements **6** remain stationary, but this should not limit the invention, since according to some embodiments both are moved and according to other embodiments the workpiece-holding elements do move while the image capturing device stays still.

Specifically, as for the described embodiment, such an image capturing device **3** is positioned on a pair of guides **26** so as to ensure the stability of the adjustment of the optical axis; however, this aspect too should not be considered a limiting feature for the invention since, for example, the relative motion path could be of any type, and it is not necessarily straight or parallel to the position of the elements **E**.

According to another aspect of the invention, the optical inspection device **1** comprises detection means **30** of each of the workpiece-holding elements **6** in order to jointly activate the image capturing device **3**. In other words, for each alignment of the image capturing device **3** with an element to be controlled **E**, the detection means **30** order the device to capture an image to perform controls.

Advantageously, therefore, there are more elements to be controlled **E**, and what is captured is one image for each individual element and not one image comprising all elements. Consequently, the elements to be controlled **E** are arranged in a suitable manner and the highest measurement accuracy is thus guaranteed.

According to possible embodiments, the means detecting the position also allow the detection of the relative position of the image capturing device in relation to other components of the inspection device of the invention during motion.

Specifically, as of the described embodiment, the detection means **30** comprise an optical sensor **31** integral to the image capturing device **3** and a position stop **32** positioned in correspondence of each of the workpiece-holding elements **6** and integral therewith. The same position stop is also positioned in correspondence of other known elements, not shown in the figure, which - when captured - act as absolute position references or even gauges for control calibration. However, this feature should not be considered as a limiting feature for the different embodiments of the invention according to which, for example, the detection means comprise mechanical end sensors, magnetic sensors, encoders or any other system capable of detecting positions.

As already known, the optical inspection devices are used for the production control of a line. So, what these inspection devices do is performing controls of elements being produced taken from predetermined points along the production line or at the end of the production line. However, it is clear that these elements are generally dirty of dust and often oil. This situation not only could negatively affect the optical control, but it may also dirty the optical inspection device and impair its operation.

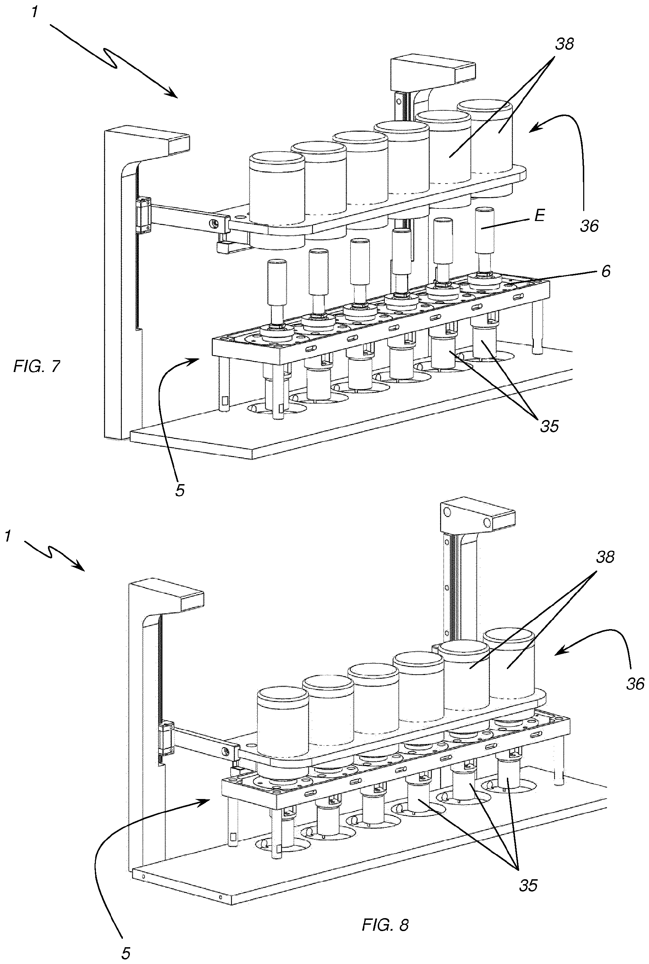

For this reason, the optical inspection device **1** of the invention also includes motorized devices **35**, also shown in figures 7 and 8 in addition to figure 5, which cause the workpiece-holding elements **6** to rotate at high speed. In other words, each movement means **35** allows to centrifugally clean the corresponding element to be controlled **E**. This cleaning process is efficient, it does not necessarily require the use of brushes, cleaning fluids, compressed air or anything else, is automated and cheap.

The number of motorized devices **35** is obviously not a limiting feature for the invention. In the described exemplary embodiment, these devices are one for each workpiece-holding element **6**, according to different embodiments, for example, one element only is available for the movement of all workpiece-holding elements.

Advantageously, the optical inspection device **1** itself includes not only a profilometer, but also a portion aimed at cleaning the inserted elements **E**.

Still advantageously, this cleaning is performed on the elements **E** that are already in position for the next control. So, advantageously, it is needed the presence of an operator who repeatedly rearranges the elements to be controlled **E** to first perform cleaning and then control them as it happens in the known art. Therefore, what is apparent is the reduction of both costs and production times.

What was previously said is that the workpiece-holding element **6** keeps the element to be controlled **E** in the position according to a predetermined axis with respect to the optical axis of the image capturing device **3**. So the centrifugal cleaning is optimized because it is made according to the same axis and the latter is automatically obtained by positioning the element **E** in the control position.

This cleaning process allows advantageously to separate dirt, which could cause difficulties in the subsequent optical control, from the element **E**.

Advantageously, everything takes place in a perfectly uniform way since the centrifugal force that is needed to perform the cleaning operation and the position of the element **E** are known and repeatable individually for each element. Moreover, liquid detergents, compressed air or brushes are not necessarily needed, thus preserving the element **E** from colliding with other elements or with the rotating baskets surfaces, and minimizing the cleaning-related costs. The entire inspection device 1 is also advantageously compact and easily manageable.

According to another aspect of the invention, a shielding body **36** is also envisaged and is located close to the workpiece-holding element **6** to prevent dirt taken off the element to be controlled **E**, from being scattered all around during its high-speed rotation. In the described embodiment, it comprises a substantially cylindrical element **38** that can also be observed in figure **9**. The top of the cylindrical element is closed and its bottom is turned inwards so as to substantially be shaped as a gutter **39** for letting liquids or similar substances flow. These liquids flow to the internal walls of the cylindrical element **38**, downwards towards the bottom and then they are collected in the gutter **39**.

Even this feature should not be considered as a limiting feature for the invention. As a matter of fact, for example, according to different embodiments of the invention, the shielding body is made of a single wall, which prevents dirt from being scattered towards a specific direction, since it is not necessary to prevent dirt from being scattered towards other directions. In any case, it is advantageous to use the shielding body **36**, which allows to keep the image-capturing device **3** and the projector **2** clean, especially when the optical inspection devices **1** are small.

Having said the above, it is clear that the optical inspection device of the invention achieves all the intended objectives.

In particular, it is accurate and correct while substantially allowing simultaneous control of two or more elements in production.

In fact, it allows to ensure that the elements to be tested are safely arranged according to a predefined position with respect to the optical axis of the image-capturing device regardless of the shaping of their external surface.

In addition, the optical inspection device of the invention allows to easily frame all elements with a camera angle suitable for the measurements that are to be performed.

The invention might be subject to many changes, which are all included in the appended claims. Moreover, all the details may furthermore be replaced by other technically equivalent elements, and materials may be different depending on the needs, without departing from the scope of protection of the invention defined by the appended claims.

## Claims

1. An optical inspection device of elements (**E**) being produced in a production line comprising:
- at least one projector (**2**) for illuminating the elements (**E**) to be controlled;
- at least one image capturing device (**3**) intended for the illuminated elements (**E**);
- at least one support group (**5**) of two or more elements (**E**) to be controlled comprising at least one workpiece-holding element (**6**) capable of retaining at least one element (**E**) to be controlled according to at least a predetermined axis with respect to the optical axis of said image capturing device (**3**);
- at least one motorized device (**35**) configured to have the workpiece-holding element (**6**) rotating - at high speed around said axis so as to perform the centrifugal cleaning of the element (**E**) to be controlled;
- movement means intended for imposing a relative motion between the workpiece-holding elements (**6**) and said image capturing device (**3**);
- detection means (**30**) of each of said workpiece-holding elements (**6**) configured to jointly operate at least said image-capturing device (**3**).

2. Optical inspection device according to claim 1, wherein said detection means (**30**) comprise at least one sensor for each of said workpiece-holding elements (**6**).

3. Optical inspection device according to claim 1, wherein said detection means (**30**) comprise at least one optical sensor (**31**) for each of said workpiece-holding elements (**6**) in order to detect the presence of an element (**E**) to be controlled.

4. Optical inspection device according to any one of the preceding claims, wherein said support group (**5**) comprises a substantially laminar body (**8**) provided with a plurality of housings (**9**) each for at least one of said workpiece-holding elements (**6**).

5. Optical inspection device according to any one of the preceding claims, wherein each said workpiece-holding element (**6**) comprises at least a gripping body (**15**) emerging from one end of said workpiece-holding element (**6**) to retain in position the element (**E**) to be controlled.

6. Optical inspection device according to any one of the preceding claims, comprising adjustment means (**18**) for the orientation of said workpiece-holding element (**6**) with respect to one or more axes.

7. Optical inspection device according to any one of the preceding claims, wherein each said workpiece-holding element (**6**) comprises at least a first flange (**10**) and at least a second flange (**11**) mutually coupled on one another.

8. Optical inspection device according to any one of the preceding claims, comprising a shielding body (**36**) placed next to said workpiece-holding element (**6**) to prevent dirt taken off the element to be controlled (**E**) from being scattered towards at least one direction during said high-speed rotation.

9. Optical inspection device according to claim 8, wherein said shielding body (**36**) comprises at least one substantially hollow cylindrical element (**38**), whose top is closed and having its bottom turned inwards so as to be shaped substantially as a gutter (**39**) for letting liquids or similar substances flow.

## Patentansprüche

1. Optische Inspektionsvorrichtung für Elemente (E), die in einer Fertigungsanlage gefertigt werden, umfassend:
- mindestens einen Projektor (2) zum Beleuchten der zu kontrollierenden Elemente (E);
- mindestens eine Bildaufnahmevorrichtung (3), die für die beleuchteten Elemente (E) gedacht ist;
- mindestens eine Traggruppe (5) von zwei oder mehreren zu kontrollierenden Elementen (E), die mindestens ein Werkstückhalteelement (6) umfasst, das in der Lage ist, mindestens ein zu kontrollierendes Element (E) gemäß mindestens einer vorbestimmten Achse im Verhältnis zur optischen Achse der Bildaufnahmevorrichtung (3) festzuhalten;
- mindestens eine motorisierte Vorrichtung (35), die konfiguriert ist, um zu bewirken, dass sich das Werkstückhalteelement (6) mit hoher Geschwindigkeit um die Achse herum dreht, um eine Zentrifugalreinigung an dem zu kontrollierenden Element (E) auszuführen;
- Bewegungsmittel, die dazu gedacht sind, eine relative Bewegung zwischen den Werkstückhalteelementen (6) und der Bildaufnahmevorrichtung (3) vorzuschreiben;
- Detektionsmittel (30) jedes der Werkstückhalteelemente (6), die konfiguriert sind, um zusammen mindestens die Bildaufnahmevorrichtung (3) zu betätigen.

2. Optische Inspektionsvorrichtung nach Anspruch 1, wobei die Detektionsmittel (30) mindestens einen Sensor für jedes der Werkstückhalteelemente (6) umfassen.

3. Optische Inspektionsvorrichtung nach Anspruch 1, wobei die Detektionsmittel (30) mindestens einen optischen Sensor (31) für jedes der Werkstückhalteelemente (6) umfassen, um das Vorliegen eines zu kontrollierenden Elements (E) zu detektieren.

4. Optische Inspektionsvorrichtung nach einem der vorhergehenden Ansprüche, wobei die Traggruppe (5) einen im Wesentlichen lamellenförmigen Körper (8) umfasst, der mit einer Vielzahl von Aufnahmen (9) jeweils für mindestens eines der Werkstückhalteelemente (6) versehen ist.

5. Optische Inspektionsvorrichtung nach einem der vorhergehenden Ansprüche, wobei jedes Werkstückhalteelement (6) mindestens einen Greifkörper (15) umfasst, der an einem Ende des Werkstückhalteelements (6) herauskommt, um das zu kontrollierende Element (E) an Ort und Stelle zu halten.

6. Optische Inspektionsvorrichtung nach einem der vorhergehenden Ansprüche, umfassend Einstellmittel (18) für die Ausrichtung des Werkstückhalteelements (6) im Verhältnis zu einer oder mehreren Achsen.

7. Optische Inspektionsvorrichtung nach einem der vorhergehenden Ansprüche, wobei jedes Werkstückhalteelement (6) mindestens eine ersten Flansch (10) und mindestens einen zweiten Flansch (11), die miteinander gekoppelt sind, umfasst.

8. Optische Inspektionsvorrichtung nach einem der vorhergehenden Ansprüche, umfassend einen Abschirmkörper (36), der neben dem Werkstückhalteelement (6) angeordnet ist, um zu verhindern, dass sich Schmutz, der von dem zu kontrollierenden Element (E) abgenommen wird, während der Hochgeschwindigkeitsdrehung in mindestens eine Richtung verteilt.

9. Optische Inspektionsvorrichtung nach Anspruch 8, wobei der Abschirmkörper (36) mindestens ein im Wesentlichen hohles zylindrisches Element (38) umfasst, dessen oberer Teil geschlossen ist und dessen unterer Teil nach innen gewandt ist, um im Wesentlichen wie eine Rinne (39) gestaltet zu sein, um Flüssigkeiten oder ähnliche Substanzen fließen zu lassen.

## Revendications

1. Dispositif d'inspection optique d'éléments (E) qui sont produits dans une chaîne de production comprenant :
- au moins un projecteur (2) pour éclairer les éléments (E) à contrôler ;
- au moins un dispositif de capture d'image (3) destiné aux éléments (E) éclairés ;
- au moins un groupe de supports (5) de deux ou plus de deux éléments (E) à contrôler comprenant au moins un élément de maintien de pièce à travailler (6) capable de retenir au moins un élément (E) à contrôler selon au moins un axe prédéterminé par rapport à l'axe optique dudit dispositif de capture d'image (3) ;
- au moins un dispositif motorisé (35) configuré pour faire tourner l'élément de maintien de pièce à travailler (6) à vitesse élevée autour dudit axe de façon à réaliser le nettoyage centrifuge de l'élément (E) à contrôler ;
- des moyens de déplacement destinés à imposer un mouvement relatif entre les éléments de maintien de pièce à travailler (6) et ledit dispositif de capture d'image (3) ;
- des moyens de détection (30) de chacun desdits éléments de maintien de pièce à travailler (6) configurés pour faire fonctionner conjointement au moins ledit dispositif de capture d'image (3).

2. Dispositif d'inspection optique selon la revendication 1, dans lequel lesdits moyens de détection (30) comprennent au moins un capteur pour chacun desdits éléments de maintien de pièce à travailler (6).

3. Dispositif d'inspection optique selon la revendication 1, dans lequel lesdits moyens de détection (30) comprennent au moins un capteur optique (31) pour chacun desdits éléments de maintien de pièce à travailler (6) afin de détecter la présence d'un élément (E) à contrôler.

4. Dispositif d'inspection optique selon l'une quelconque des revendications précédentes, dans lequel ledit groupe de supports (5) comprend un corps sensiblement laminaire (8) pourvu d'une pluralité de logements (9) chacun pour au moins l'un desdits éléments de maintien de pièce à travailler (6).

5. Dispositif d'inspection optique selon l'une quelconque des revendications précédentes, dans lequel chaque dit élément de maintien de pièce à travailler (6) comprend au moins un corps de saisie (15) sortant d'une extrémité dudit élément de maintien de pièce à travailler (6) pour retenir en position l'élément (E) à contrôler.

6. Dispositif d'inspection optique selon l'une quelconque des revendications précédentes, comprenant des moyens de réglage (18) de l'orientation dudit élément de maintien de pièce à travailler (6) par rapport à un ou plusieurs axes.

7. Dispositif d'inspection optique selon l'une quelconque des revendications précédentes, dans lequel chaque dit élément de maintien de pièce à travailler (6) comprend au moins une première bride (10) et au moins une seconde bride (11) couplées mutuellement l'une à l'autre.

8. Dispositif d'inspection optique selon l'une quelconque des revendications précédentes, comprenant un corps de blindage (36) placé à côté dudit élément de maintien de pièce à travailler (6) pour empêcher la dispersion de la poussière enlevée de l'élément à contrôler (E) vers au moins une direction pendant ladite rotation à vitesse élevée.

9. Dispositif d'inspection optique selon la revendication 8, dans lequel ledit corps de blindage (36) comprend au moins un élément cylindrique sensiblement creux (38), dont le haut est fermé et ayant son fond tourné vers l'intérieur de façon à être façonné sensiblement comme une gouttière (39) pour laisser s'écouler des liquides ou des substances similaires.
